# FASCICULE DE BREVET EUROPEEN

(11) **EP 4 132 755 B1**
(45) Date de publication et mention de la délivrance du brevet: **25.06.2025**
(21) Numéro de dépôt: 21726143.7
(22) Date de dépôt: 08.04.2021
(51) Int. Cl.: B27K 3/02, B27K 3/34, B27K 3/42, B27K 3/50, C07C 273/00, C07F 9/117, C08L 97/02, C09K 21/00, D06M 13/00

(54) **PROCÉDÉ D'IGNIFUGATION DE MATÉRIAUX LIGNOCELLULOSIQUES, ET UTILISATION DES MATÉRIAUX LIGNOCELLULOSIQUES IGNIFUGÉS AINSI OBTENUS**
FLAMMHEMMENDE BEHANDLUNG VON LIGNOCELLULOSEMATERIALIEN, UND VERWENDUNGEN DER RESULTIERENDEN FLAMMHEMMENDEN LIGNOCELLULOSEMATERIALIEN
FLAME RETARDANT TREATMENT OF LIGNOCELLULOSIC MATERIALS, AND USES OF THE RESULTING FLAME-RETARDED LIGNOCELLULOSIC MATERIALS

(30) Priorité: 09.04.2020 FR 2003600
(43) Date de publication de la demande: 15.02.2023
(73) Titulaire: Université de Lorraine, 54000 Nancy (FR); Institut Mines Telecom, 91120 Palaiseau (FR); Universite Libanaise, Beyrouth BP 6573 14 (LB)
(72) Inventeur: BROSSE, Nicolas, 54330 VEZELISE (FR); KAPEL, Romain, 54130 SAINT MAX (FR); SONNIER, Rodolphe, 38000 GRENOBLE (FR); EL HAGE, Roland, Aintoura el metn (LB); SEGOVIA, César, 88000 EPINAL (FR); ANTOUN, Karina, 54500 VANDOEUVRE LES NANCY (FR); MOUSSA, Maria, Martmoura Kobayat (LB)
(74) Mandataire: Plasseraud IP
(86) Numéro de dépôt international: PCT/FR2021/050628
(87) Numéro de publication internationale: WO 2021/205128

(56) Documents cités:
- EP-A2- 0 346 559
- CN-A- 110 524 657
- JP-A- H11 268 008
- US-A1- 2020 056 057
- DIRK VAN DE RIET: "Evaluating Steam Explosion as Pre-treatment of Hemp Fibres for Use in High Value Products", 19 June 2019 (2019-06-19), pages 1 - 40, XP055747620, Retrieved from the Internet <URL:https://www.ihog.nl/wp-content/uploads/2019/10/Bachelor_IP_Dirk_van_de_Riet_Final.pdf> [retrieved on 20201106]
- ANONYMOUS: "Lignocellulosic Fiber - an overview | ScienceDirect Topics", 1 January 2018 (2018-01-01), XP055841566, Retrieved from the Internet <URL:https://www.sciencedirect.com/topics/engineering/lignocellulosic-fiber> [retrieved on 20210916]
- DATABASE COMPENDEX [online] ENGINEERING INFORMATION, INC., NEW YORK, NY, US; April 2011 (2011-04-01), PAN L ET AL: "Extraction of phytic acid and preparation of protein isolates from rapeseed meal", XP002804226, Database accession no. E20112714112594
- NONGYE GONGCHENG XUEBAO/TRANSACTIONS OF THE CHINESE SOCIETY OF AGRICULTURAL ENGINEERING APRIL 2011 CHINESE SOCIETY OF AGRICULTURAL ENGINEERING CHN, vol. 27, no. 4, April 2011 (2011-04-01), pages 370 - 375, DOI: 10.3969/J.ISSN.1002-6819.2011.04.065
- MCMILLAN COLEEN P: "Lignin Deposition in Cotton Cells - Where is the lignin?", 1 January 2013 (2013-01-01), XP055846037, Retrieved from the Internet <URL:https://www.longdom.org/open-access/lignin-deposition-in-cotton-cells-where-is-the-lignin-2329-9029.1000e106.pdf> [retrieved on 20210930], DOI: 10.4172/jpbp.1000e106

## Description

### Domaine technique

La présente divulgation relève du domaine de la chimie et plus particulièrement du domaine de l'ignifugation. L'invention concerne notamment un nouveau procédé d'ignifugation biosourcé et dépourvu de solvants. L'invention concerne plus particulièrement un procédé d'ignifugation de matériaux lignocellulosiques par greffage d'acide phytique sur lesdits matériaux lignocellulosiques. Elle concerne également les nouveaux matériaux lignocellulosiques ignifugés ainsi obtenus et leurs utilisations dans la fabrication de matériaux ignifugés durs (tels que des panneaux) ou souples (tissés ou non tissés).

### Technique antérieure

L'ignifugation désigne un ensemble de traitements effectués pour améliorer la tenue au feu d'un matériau. L'ignifugation permet donc de rendre incombustible ou moins combustible un matériau naturellement inflammable en l'imprégnant de substances ignifuges.

Des procédés d'ignifugation faisant appel à de l'acide phytique ont déjà été décrits dans l'art antérieur.

Ainsi, la publication de Yang Zhou et al. (1) décrit que l'acide phytique est un excellent dopant permettant d'améliorer la résistance à la flamme de composites à base de papier. L'acide phytique est utilisé en mélange (non greffé) dans un polymère de synthèse (la polyaniline). Ce dernier est utilisé comme traitement de surface sur du papier pour lui conférer des propriétés de conductivité électrique et de retardateur de flamme.

La publication de Lucie Costes et al. (2) étudie les effets de différentes combinaisons cellulose/phosphore sur les propriétés ignifuges du polylactide (PLA) qui est un polymère de synthèse dont la matière première est biosourcée. Les essais ont montré que les combinaisons cellulose microcristalline phosphorylée (MCC-P) / aluminium phytate ou cellulose nanocristalline (NCC) / aluminium phytate donnaient de bons résultats. Dans cette publication, la cellulose est modifiée chimiquement dans de l'urée fondue à 140°C par de l'acide phosphorique, lavée par une solution de soude puis précipitée dans du méthanol. Des composites à base de PLA, de cellulose modifiée et de sel d'aluminium d'acide phytique (non greffé) ont été produits par extrusion.

La publication de Yu-Yang Gao et al. (3) décrit l'utilisation d'un sel de l'acide phytique, obtenu par réaction d'acide phytique et de pipérazine, avec du polypropylène afin d'améliorer la résistance à la flamme de ce dernier. L'acide phytique est utilisé avec une amine de synthèse et additionné en tant qu'additif (sans greffage) à un polymère dérivé du pétrole.

La publication de Xiao-hui Liu et al. (4) décrit l'utilisation d'un sel d'ammonium de l'acide phytique (PAA : phytic acid ammonium) pour améliorer la résistance à la flamme de fibres « Lyocell » (qui sont des fibres de cellulose régénérées). Dans cette publication l'acide phytique est combiné dans un premier temps à de l'urée puis précipité dans du N,N-diméthylformamide. Le sel obtenu est mis à réagir à chaud avec la cellulose régénérée en présence de dicyanadiamide dans de l'eau. US 2020/056057 A1 décrit l'utilisation de l'acide phytique et de l'urée afin d'améliorer la résitance à la flamme de textiles.

Cependant les procédés décrits dans ces publications ne sont pas biosourcés parce qu'ils font recours à des solvants et/ou à des composés chimiques au cours de la préparation du matériau ignifugé ou encore parce que le matériau de départ à ignifuger est souvent un composé obtenu par synthèse chimique. De plus, l'acide phytique n'est généralement pas greffé de façon covalente au matériau ignifugé et se trouve uniquement présent à la surface du matériau ignifugé.

### Résumé

Il existe donc à ce jour le besoin de développer de nouveaux procédés d'ignifugation biosourcés, notamment pour répondre à une demande de plus en plus pressante de la part des industriels pour des matériaux anti-feu, non toxiques et biosourcés.

Un des buts de l'invention est ainsi de développer un procédé biosourcé et dépourvu de solvant. On entend par « procédé biosourcé » un procédé qui met en œuvre de la matière biosourcée, au niveau du matériau de départ mais si possible également au niveau de l'agent d'ignifugation.

Une matière biosourcée est une matière issue de la biomasse végétale ou animale. La biomasse désigne l'ensemble de la matière vivante, c'est-à-dire une matière d'origine biologique, à l'exception des matières géologiques ou fossiles. La biomasse est essentiellement composée de carbone (environ 50%), d'oxygène (environ 40%), d'hydrogène (environ 6%), d'une faible part d'azote (de 0,4 à 1,2%) et de matières minérales (calcium, silicium, potassium).

Selon l'invention, la matière de départ à ignifuger, à savoir une matière lignocellulosique, est biosourcée.
On entend par matière lignocellulosique, une matière constituée de trois composants majeurs : la cellulose, les hémicelluloses et la lignine. La matière lignocellulosique représente la plus grande majorité de la biomasse. En moyenne, la matière lignocellulosique contient 40-60% de cellulose, 20-40% d'hémicelluloses et 10-25% de lignine. La matière lignocellulosique ignifugée selon le procédé de l'invention contient donc de telles proportions de cellulose, d'hémicellulose et de lignine.

Selon un mode de réalisation de l'invention, l'agent d'ignifugation, à savoir l'acide phytique, est biosourcé.

La présente invention a plus particulièrement pour objet un procédé d'ignifugation selon la revendication 1.

Concernant les pourcentages d'acide phytique et d'urée dans la solution aqueuse telle que ci-dessus définie, on pourra également citer de 0,5% à 7% d'acide phytique et de 1% à 22% d'urée, lesdits pourcentages étant exprimés en masse par rapport à la masse totale de la solution aqueuse.

Selon un mode de réalisation de l'invention, la matière lignocellulosique mise en œuvre dans le procédé d'ignifugation se trouve sous forme de fibres et/ou de particules. Dans l'invention, le terme « fibres » désigne plus particulièrement les fibres végétales naturelles et le terme « particules » désigne les particules de bois. Les fibres végétales naturelles regroupent différentes catégories de fibres suivant leurs origines botaniques (bois ou plantes) et leurs localisations dans la plante. Pour les plantes cultivées, on distingue ainsi les fibres libériennes, qui sont extraites de la partie extérieure de la tige dans le liber, les fibres extraites du tronc ou des tiges, les fibres extraites des feuilles, les fibres extraites des graines ou des fruits, et les pailles.

Selon un autre mode de réalisation de l'invention, la matière lignocellulosique plus particulièrement utilisée dans le procédé de l'invention se trouve sous forme de fibres végétales telles que les fibres de bois et/ou les fibres de plante, et en particulier les fibres libériennes, ou sous forme de particules de bois.

Les fibres de bois et/ou de plantes présentent un diamètre inférieur ou égal à 500 µm et une longueur allant de 1 mm à 50 cm. A titre indicatif les fibres libériennes peuvent être très longues (jusqu'à 50 cm) tandis que les fibres de bois sont bien plus courtes et présentent généralement des longueurs de quelques millimètres.

Le terme « particules » de bois au sens de l'invention désigne des fragments de bois et/ou de la sciure de bois. Les particules de bois peuvent présenter des formes variables et lorsqu'elles sont de forme sphérique elles présentent alors un diamètre inférieur à 5 mm.

Selon un mode de réalisation de l'invention :
- les fibres de plante sont plus particulièrement des fibres libériennes choisies dans le groupe comprenant les fibres de chanvre, de lin, de ramie et de jute,
- les fibres et/ou particules de bois sont plus particulièrement choisies dans le groupe comprenant les fibres et/ou particules d'épicéa, de frêne, de bouleau, de peuplier, de hêtre et de chêne.

Selon un mode de réalisation avantageux de l'invention, la matière lignocellulosique à ignifuger est préalablement soumise à une explosion à la vapeur. Ainsi la matière lignocellulosique utilisée au départ du procédé d'ignifugation est choisie dans le groupe comprenant les fibres de plante explosées à la vapeur, et en particulier les fibres libériennes explosées à la vapeur, les fibres de bois explosées à la vapeur et les particules de bois explosées à la vapeur.

L'explosion à la vapeur est un traitement thermo-mécanico-chimique qui consiste à porter la matière lignocellulosique à haute température (160-270°C) par injection de vapeur saturée sous haute pression (10-50 bars) pendant un temps court (quelques secondes à quelques minutes) puis à pratiquer une détente brutale jusqu'à pression atmosphérique. Il en résulte une déstructuration importante de la matière lignocellulosique.
Une installation d'explosion à la vapeur est composée d'un générateur de vapeur qui alimente un réacteur qui sera soumis à une dépressurisation soudaine. Lors de la dépressurisation la matière est éjectée du réacteur et est récupérée au niveau d'un éclateur.
Le traitement d'explosion à la vapeur permet de fractionner la matière lignocellulosique de façon à valoriser les différentes fractions polymères constitutives de la matière lignocellulosique. Plus particulièrement l'explosion à la vapeur a pour conséquence de diminuer le taux d'hémicellulose contenue dans la matière lignocellulosique.
Ce traitement permet également d'affiner la taille des fibres végétales et/ou des particules de bois, afin de produire des micro- et nanofibres et/ou des micro- et nanoparticules.

Selon le procédé de l'invention, les fibres de plante explosées à la vapeur, et en particulier les fibres libériennes explosées à la vapeur, présentent un diamètre inférieur à 100 µm, et de préférence inférieur à 50 µm, et une longueur allant de 1 cm à 10 cm, et de préférence de 3 cm à 5 cm.

Les particules de bois explosées à la vapeur présentent, lorsqu'elles sont de forme sphérique, un diamètre inférieur à 3 mm.

Selon un autre mode de réalisation de l'invention, la matière lignocellulosique à ignifuger, de préférence préalablement explosée à la vapeur, est blanchie.
Le but du blanchiment est de délignifier la matière lignocellulosique, à savoir d'enlever tout ou partie de la lignine de la matière lignocellulosique, ce qui a pour conséquence une modification profonde de la fibre et l'obtention d'une matière lignocellulosique de couleur blanche.
Le blanchiment de la matière cellulosique est effectué à l'aide d'ions chlorites ou d'un peroxyde.

La matière lignocellulosique utilisée au départ du procédé d'ignifugation de l'invention peut donc être :
- « brute » (c'est-à-dire qu'elle n'a pas subi d'explosion à la vapeur et/ou de blanchiment),
- « explosée » (elle a subi une explosion à la vapeur mais pas de blanchiment),
- « blanchie » (elle a subi un blanchiment mais pas d'explosion à la vapeur),
- « explosée blanchie » (elle a subi une explosion et un blanchiment).
Lorsque la matière lignocellulosique est explosée blanchie, elle est soumise en premier lieu à l'explosion à la vapeur puis ensuite au blanchiment.
Excepté une éventuelle explosion à la vapeur ou un éventuel blanchiment, la matière lignocellulosique utilisée au départ du procédé d'ignifugation de l'invention n'a subi aucun autre traitement chimique.

Selon un autre mode de réalisation de l'invention l'acide phytique est obtenu à partir d'un tourteau de colza.
Le « tourteau » désigne le résidu solide obtenu après extraction de l'huile des graines ou des fruits de plantes oléagineuses. Les tourteaux contiennent des proportions relativement importantes d'acide phytique (3% à 6%) qui constitue une réserve naturelle de phosphore pour les graines des plantes.
Le colza est la ressource oléagineuse la plus cultivée en France. Le tourteau de colza est une matière première industrielle intéressante par son contenu en protéines végétales et son prix attractif. Il est ainsi utilisé dans l'alimentation animale. Cependant l'acide phytique est un agent anti-nutritif qui a un impact négatif sur la qualité du tourteau pour des applications en alimentation animale.
Extraire l'acide phytique à partir du tourteau de colza (qui comprend de 5 à 6% d'acide phytique) est donc un excellent moyen à la fois pour valoriser le tourteau de colza dans la filière alimentaire et pour disposer d'acide phytique.

Selon l'invention, le procédé d'extraction de l'acide phytique à partir d'un tourteau de colza comprend les étapes suivantes :
- mise en contact du tourteau de colza avec une solution aqueuse acide sous agitation,
- centrifugation et récupération de la phase aqueuse,
- ultrafiltration de la phase aqueuse,
- récupération de la phase aqueuse issue de l'ultrafiltration,
- lyophilisation de la phase aqueuse issue de l'ultrafiltration afin d'obtenir un lyophilisat comprenant de l'acide phytique.

Le lyophilisat d'acide phytique ainsi obtenu est ensuite utilisé en combinaison avec de l'urée afin de préparer une solution aqueuse comprenant de 0,5% à 10% d'acide phytique et de 1% à 30% d'urée, et de préférence de 3% à 7% d'acide phytique et de 15% à 22% d'urée, lesdits pourcentages étant exprimés en masse par rapport à la masse totale de la solution aqueuse, ladite solution aqueuse étant utilisée dans l'étape d'imprégnation du procédé de l'invention. Des concentrations de 0,5% à 7% d'acide phytique et de 1% à 22% d'urée, lesdits pourcentages étant exprimés en masse par rapport à la masse totale de la solution aqueuse, sont également appropriées dans le cadre de l'invention.

L'agent ignifugeant du procédé de l'invention est l'acide phytique. Il est cependant utilisé en combinaison avec l'urée qui a notamment pour rôle d'augmenter l'accessibilité de la cellulose (provenant de la matière lignocellulosique) par gonflement et de protéger la matière lignocellulosique de la dégradation durant l'étape de cuisson.

Selon un mode de réalisation avantageux du procédé de l'invention, l'étape d'imprégnation de la matière lignocellulosique est effectuée à température ambiante :
- par trempage dans la solution aqueuse d'acide phytique et d'urée, ou
- par pulvérisation avec la solution aqueuse d'acide phytique et d'urée,
ladite solution aqueuse d'acide phytique et d'urée étant telle que ci-dessus définie.

Selon l'invention, lorsque l'imprégnation est effectuée par trempage, la durée d'imprégnation est de 5 minutes à 1 heure, et de préférence de 15 minutes à 1 heure. Dans le cas d'une imprégnation par trempage le procédé de l'invention comprend en outre, à l'issue de l'étape d'imprégnation, et avant l'étape de séchage, une étape de récupération, de préférence par filtrage, de la matière lignocellulosique imprégnée.

Selon un mode de réalisation avantageux de l'invention, lorsque l'étape d'imprégnation est effectuée par pulvérisation, alors il n'est pas nécessaire de procéder à une étape de séchage avant l'étape de cuisson. En effet, la matière lignocellulosique obtenue à l'issue de l'étape d'imprégnation par pulvérisation comprend une humidité allant de 5% à 20%.

Lorsque l'étape d'imprégnation est effectuée par trempage, il est alors nécessaire de procéder à un séchage avant l'étape de cuisson.

L'étape de séchage de la matière lignocellulosique imprégnée est effectuée à une température allant de 20°C à 60°C, et de préférence de 40 °C à 60°C, pendant une durée allant de 5 minutes à 18 heures, et de préférence allant de 15 minutes à 30 minutes.
A titre indicatif le séchage est effectué dans une étuve ou par air pulsé.

L'étape de cuisson de la matière lignocellulosique imprégnée et éventuellement séchée est effectuée à une température allant de 140 C à 200°C, et de préférence de 140°C à 160°C, pendant une durée allant de 15 minutes à 5 heures, et de préférence de 30 min à 2h.

L'étape de cuisson peut être effectuée dans un four tunnel continu.
Le four tunnel continu est un four à convoyeur ou encore un four à passage permettant une cuisson en continu, la matière lignocellulosique étant convoyée dans le four sur un tapis.
Ainsi, selon un autre mode de réalisation avantageux du procédé de l'invention, les étapes de séchage et cuisson sont réalisées en continu.

Selon encore un autre mode de réalisation, le procédé de l'invention comprend, à l'issue de l'étape de cuisson, une étape de lavage et/ou de filtration. L'étape de lavage et/ou de filtration permet d'éliminer les molécules non fixées par liaison forte (à savoir par liaison covalente) sur la matière lignocellulosique.

Le procédé de l'invention permet en effet avantageusement un greffage covalent du phosphore provenant de l'acide phytique à la fois à la surface et au cœur de la matière lignocellulosique. Le procédé de l'invention est donc encore caractérisé en ce que, dans la matière lignocellulosique ignifugée, le phosphore provenant de l'acide phytique est greffé par liaison covalente à la surface et au cœur de ladite matière lignocellulosique ignifugée.

Selon un mode de réalisation avantageux de l'invention, le procédé d'ignifugation de l'invention ne colore pas la matière lignocellulosique ignifugée.

Selon un autre mode de réalisation avantageux, le procédé de l'invention est encore caractérisé en ce qu'il est dépourvu de solvant. Il ne nécessite pas non plus l'utilisation d'eau.

De façon avantageuse, le procédé de l'invention ne met en œuvre que des étapes d'imprégnation, de séchage et de cuisson. Il n'y a pas d'étape en solution. Avec la possibilité du traitement en continu il est en outre facile à industrialiser. Le procédé d'ignifugation de l'invention est respectueux de l'environnement par l'utilisation de matériaux biosourcés, inertes et non toxiques. Il est en outre simple à mettre en œuvre et économique. Il permet également de valoriser des co-produits agricoles actuellement très peu valorisés, à savoir l'acide phytique obtenu à partir des tourteaux de colza.

La matière lignocellulosique obtenue selon le procédé d'ignifugation de l'invention ne s'enflamme plus, elle ne permet plus la propagation de la flamme et elle charbonne lorsqu'on la brûle.

Selon un autre aspect de l'invention, il est proposé une matière lignocellulosique ignifugée susceptible d'être obtenue selon le procédé tel que ci-dessus décrit.

La présente invention a encore pour objet une matière lignocellulosique ignifugée, caractérisée en ce qu'elle comprend une teneur en phosphore allant de 0,1% à 10%, de préférence allant de 0,3 % à 3%, lesdits pourcentages étant exprimés en masse par rapport à la masse totale de la matière lignocellulosique ignifugée, et en ce que le phosphore est greffé par liaison covalente à la surface et au cœur de ladite matière lignocellulosique ignifugée.

La matière lignocellulosique ignifugée telle que ci-dessus définie est encore caractérisée en ce qu'elle présente un dégagement total de chaleur à la combustion (« THR » Total Heat Release) allant de 0,5 à 11 KJ/g tel que mesuré à l'aide d'un microcalorimètre de combustion selon la norme ASTM D7309, ladite norme se référant à une pyrolyse en environnement anaérobie à 1K/s jusqu'à 750°C.

La matière lignocellulosique ignifugée de l'invention, telle que ci-dessus définie, est de préférence obtenue à partir d'une matière lignocellulosique choisie dans le groupe comprenant des fibres de plante (fibres libériennes telles que fibres de chanvre, de lin, de ramie et de jute), des fibres de bois, des particules de bois (épicéa, frêne, bouleau, peuplier, hêtre, chêne) et leurs mélanges.

Selon l'invention, la matière lignocellulosique ignifugée de l'invention est de préférence obtenue à partir d'une matière lignocellulosique explosée à la vapeur.

Selon un autre aspect de l'invention, il est proposé l'utilisation d'une matière lignocellulosique ignifugée telle que ci-dessus décrite ou telle qu'obtenue selon le procédé tel que ci-dessus décrit.

La présente invention a ainsi encore pour objet l'utilisation d'une matière lignocellulosique biosourcée ignifugée telle que ci-dessus décrite ou telle qu'obtenue selon le procédé tel que ci-dessus décrit, pour la fabrication :
- de matériaux composites ignifugés à base de fibres végétales,
- de matériaux souples ignifugés tissés ou non tissés à base de fibres végétales, et notamment de textiles,
- de matériaux ignifugés à base de fibres de bois et/ou de particules de bois, et notamment de panneaux de bois ignifugés.

A titre d'exemples de matériaux composites ignifugés à base de fibres végétales on pourra citer les matériaux composites ignifugés à base de fibres végétales (et notamment de fibres de bois) et de résines thermoplastiques. De tels matériaux composites trouvent des applications dans les domaines du bâtiment et du transport.

A titre d'exemples de matériaux souples ignifugés tissés à base de fibres végétales on pourra citer les textiles d'ameublement, les textiles techniques pour l'habitat, les textiles techniques (vêtements de sport, pour professionnels (pompiers etc.).
A titre d'exemples de matériaux souples ignifugés non tissés à base de fibres végétales on pourra citer les géotextiles, les membranes souples pour la construction ou le transport.

Selon un mode de réalisation avantageux de l'invention, lorsque la matière lignocellulosique ignifugée est obtenue à partir de fibres de bois explosées à la vapeur et/ou de particules de bois explosées à la vapeur, alors ladite matière lignocellulosique ignifugée peut avantageusement être utilisée pour produire des panneaux de bois ignifuges sans colle et sans résine, par simple pressage de la matière lignocellulosique. L'invention concerne donc encore l'utilisation telle que ci-dessus définie, pour la fabrication de panneaux de bois, caractérisée en ce que la matière lignocellulosique ignifugée est obtenue à partir de fibres de bois explosées à la vapeur et/ou de particules de bois explosées à la vapeur, et en ce que les panneaux de bois ignifuges obtenus sont dépourvus de colle et de résine.

L'invention a également pour objet des panneaux de bois ignifuges, dépourvus de colle et de résine, fabriqués à partir d'une matière lignocellulosique ignifuge elle-même obtenue à partir de fibres de bois explosées à la vapeur et/ou de particules de bois explosées à la vapeur.
De tels panneaux sont donc parfaitement respectueux de l'environnement.

### Brève description des dessins

D'autres caractéristiques, détails et avantages apparaîtront à la lecture de la description détaillée ci-après, et à l'analyse des dessins annexés, sur lesquels :
**Fig. 1**

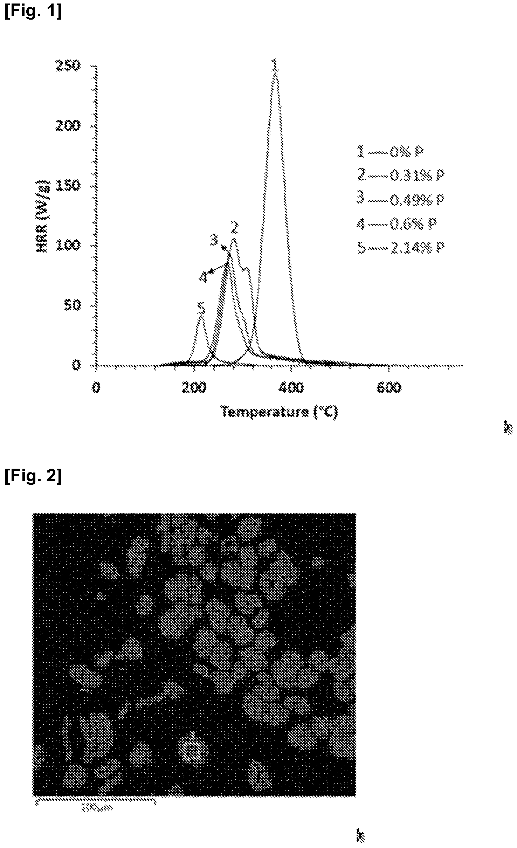

   [Fig. 1] montre différentes courbes du débit calorifique (« HRR » Heat Rate release) en fonction de la température, pour des fibres de chanvre explosées à la vapeur et blanchies, obtenues avec le calorimètre à flux de combustion par pyrolyse (PCFC).
   La courbe 1 est relative à des fibres de chanvre témoin, qui ne sont pas ignifugées (et qui comprennent ainsi une teneur en phosphore de 0%).
   La courbe 2 est relative à des fibres de chanvre ignifugées selon le procédé de l'invention, qui comprennent une teneur en phosphore de 0,31%.
   La courbe 3 est relative à des fibres de chanvre ignifugées selon l'invention, comprennent une teneur en phosphore de 0,49%.
   La courbe 4 est relative à des fibres de chanvre ignifugées selon l'invention, qui comprennent une teneur en phosphore de 0,62%.
   La courbe 5 est relative à des fibres de chanvre ignifugées selon l'invention, qui comprennent une teneur en phosphore de 2,14%.
**Fig.2**
   [Fig.2] est une cartographie du phosphore pour les fibres de chanvre explosées à la vapeur et blanchies, ignifugées selon le procédé de l'invention.
**Fig.3**

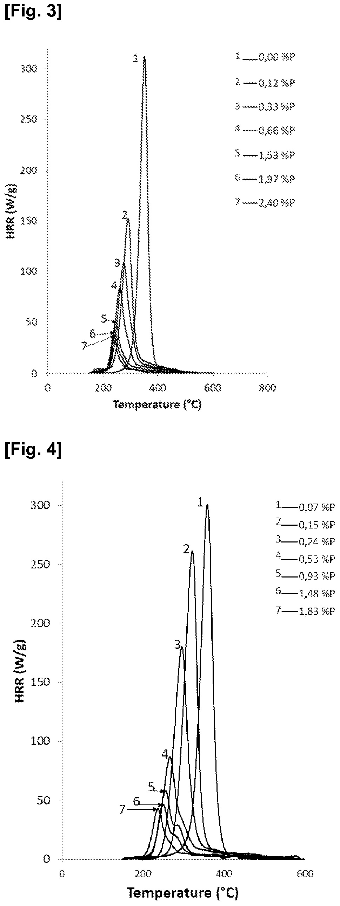

   [Fig. 3] montre différentes courbes du débit calorifique (« HRR » Heat Rate release) en fonction de la température, pour des fibres de chanvre explosées et blanchies, obtenues avec le calorimètre à flux de combustion par pyrolyse (PCFC). La courbe 1 est relative à des fibres de chanvre témoin, qui ne sont pas ignifugées (et qui comprennent ainsi une teneur en phosphore de 0%).
   La courbe 2 est relative à des fibres de chanvre ignifugées selon l'invention, qui comprennent une teneur en phosphore de 0,12%.
   La courbe 3 est relative à des fibres de chanvre ignifugées selon l'invention, qui comprennent une teneur en phosphore de 0,33%.
   La courbe 4 est relative à des fibres de chanvre ignifugées selon l'invention, qui comprennent une teneur en phosphore de 0,66%.
   La courbe 5 est relative à des fibres de chanvre ignifugées selon l'invention, qui comprennent une teneur en phosphore de 1,53%.
   La courbe 6 est relative à des fibres de chanvre ignifugées selon l'invention, qui comprennent une teneur en phosphore de 1,97%.
   La courbe 7 est relative à des fibres de chanvre ignifugées selon l'invention, qui comprennent une teneur en phosphore de 2,40%.
**Fig. 4**
   [Fig. 4] montre différentes courbes du débit calorifique (« HRR » Heat Rate release) en fonction de la température, pour des fibres de chanvre explosées et non blanchies, obtenues avec le calorimètre à flux de combustion par pyrolyse (PCFC).
   La courbe 1 est relative à des fibres de chanvre témoin, qui ne sont pas ignifugées. Ces fibres témoin comprennent une teneur en phosphore de 0,07%.
   La courbe 2 est relative à des fibres de chanvre ignifugées selon l'invention, qui comprennent une teneur en phosphore de 0,15%.
   La courbe 3 est relative à des fibres de chanvre ignifugées selon l'invention, qui comprennent une teneur en phosphore de 0,24%.
   La courbe 4 est relative à des fibres de chanvre ignifugées selon l'invention, qui comprennent une teneur en phosphore de 0,53%.
   La courbe 5 est relative à des fibres de chanvre ignifugées selon l'invention, qui comprennent une teneur en phosphore de 0,93%.
   La courbe 6 est relative à des fibres de chanvre ignifugées selon l'invention, qui comprennent une teneur en phosphore de 1,48%.
   La courbe 7 est relative à des fibres de chanvre ignifugées selon l'invention, qui comprennent une teneur en phosphore de 1,83%.
**Fig. 5**

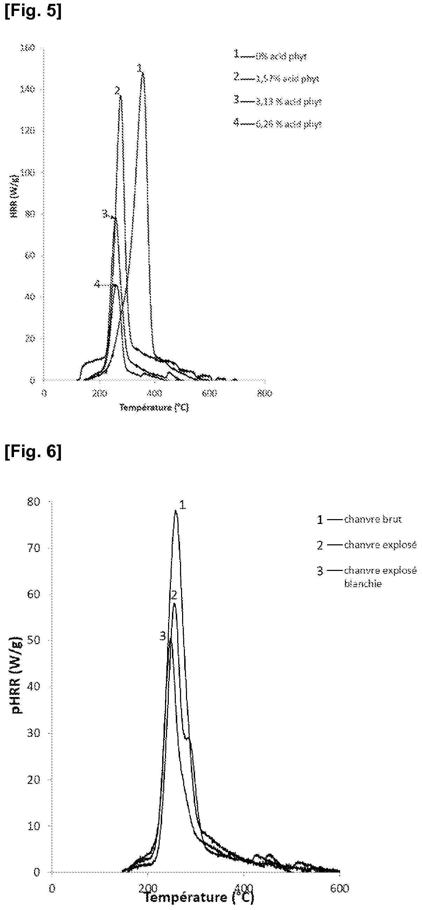

   [Fig.5] montre différentes courbes du débit calorifique (« HRR » Heat Rate release) en fonction de la température, pour des fibres de chanvre brutes (à savoir non explosées à la vapeur et non blanchies) obtenues avec le calorimètre à flux de combustion par pyrolyse (PCFC).
   La courbe 1 est relative à des fibres de chanvre témoin brutes, qui ne sont pas ignifugées (et qui comprennent une teneur en phosphore de 0%).
   La courbe 2 est relative à des fibres de chanvre ignifugées selon l'invention, en utilisant 1,57% d'acide phytique et 5% d'urée.
   La courbe 3 est relative à des fibres de chanvre ignifugées selon l'invention, en utilisant 3,13% d'acide phytique et 10% d'urée.
   La courbe 4 est relative à des fibres de chanvre ignifugées selon l'invention, en utilisant 6,26% d'acide phytique et 20% d'urée.
Fig. 6
   [Fig. 6] montre différentes courbes du débit calorifique (« HRR » Heat Rate release) en fonction de la température, obtenues avec le calorimètre à flux de combustion par pyrolyse (PCFC), pour des fibres de chanvre ignifugées et brutes (i.e. non explosées et non blanchies), pour des fibres de chanvre ignifugées, explosées et non blanchies, et pour des fibres de chanvre ignifugées, explosées et blanchies. Ces fibres sont toutes ignifugées avec le même taux d'acide phytique (3,13%).
   La courbe 1 est relative à des fibres de chanvre brutes, ignifugées selon l'invention, en utilisant 3,13% d'acide phytique et 10% d'urée.
   La courbe 2 est relative à des fibres de chanvre explosées et non blanchies, ignifugées selon l'invention, en utilisant 3,13% d'acide phytique et 10% d'urée.
   La courbe 3 est relative à des fibres de chanvre explosées et blanchies, ignifugées selon l'invention, en utilisant 3,13% d'acide phytique et 10% d'urée.
**Fig. 7**

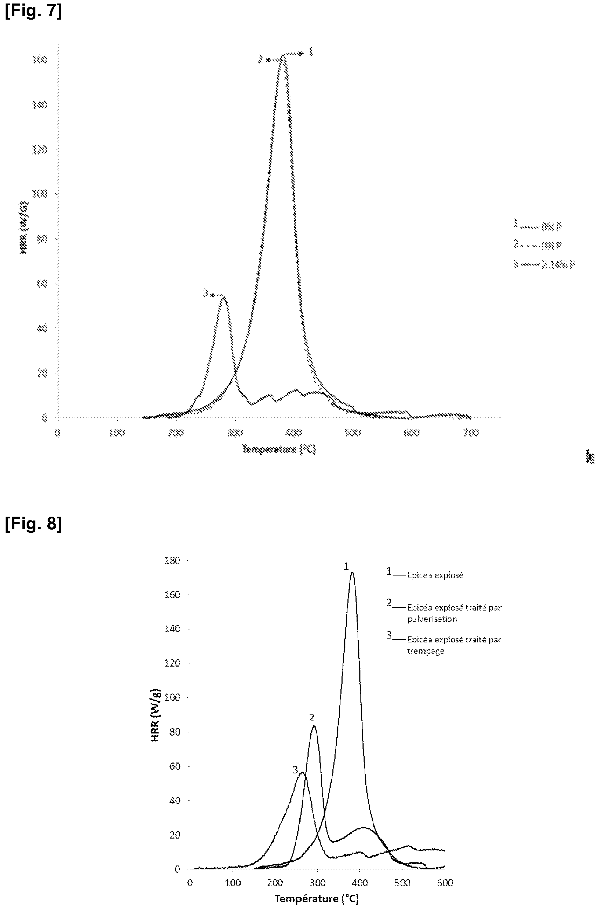

   [Fig. 7] montre différentes courbes du débit calorifique (« HRR » Heat Rate release) en fonction de la température, pour des particules d'épicéa, obtenues avec le calorimètre à flux de combustion par pyrolyse (PCFC).
   La courbe 1 est relative à des particules d'épicéa explosées à la vapeur (n'ayant été soumises à aucun autre traitement que celui de l'explosion à la vapeur), qui comprennent une teneur en phosphore de 0%.
   La courbe 2 est relative à des particules d'épicéa explosées à la vapeur qui ont ensuite été soumises respectivement à une étape de séchage et de cuisson telles que décrites dans le procédé de l'invention mais qui n'ont pas été soumises à une étape d'imprégnation avec une solution comprenant de l'acide phytique. Lesdites particules d'épicéa comprennent une teneur en phosphore de 0%.
   La courbe 3 est relative à des particules d'épicéa explosées à la vapeur, ignifugées selon le procédé de l'invention, qui comprennent une teneur en phosphore de 2,14%.
**Fig. 8**
   [Fig. 8] montre différentes courbes du débit calorifique (« HRR » Heat Rate release) en fonction de la température, pour des particules d'épicéa, obtenues avec le calorimètre à flux de combustion par pyrolyse (PCFC).
   La courbe 1 est relative à des particules d'épicéa explosées à la vapeur (témoin : particules non ignifugées).
   La courbe 2 est relative à des particules d'épicéa explosées à la vapeur, dont l'étape d'imprégnation du procédé d'ignifugation est effectuée par pulvérisation à l'aide de 160mL d'une solution aqueuse comprenant 10% d'acide phytique et 10% d'urée, et dont le temps de cuisson des particules d'épicéa imprégnées est de 30 minutes.
   La courbe 3 est relative à des particules d'épicéa explosées à la vapeur, dont l'étape d'imprégnation du procédé d'ignifugation est effectuée par trempage à l'aide de 400mL d'une solution aqueuse comprenant 6,26% d'acide phytique et 20% d'urée, et dont le temps de cuisson des particules d'épicéa imprégnées et séchées est de 120 minutes.
**Fig. 9**

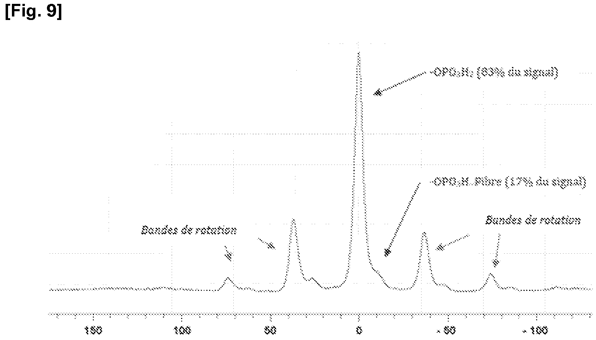

   [Fig. 9] est un spectre RMN ³¹P de fibres de chanvre greffées à du phosphore par une liaison covalente.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

### Exemples

### Exemple1

### Préparation des solutions d'imprégnation à base d'acide phytique

Extraction de l'acide phytique à partir de tourteaux de colza La farine de tourteaux de colza, qui est utilisée comme matière première, est mise en suspension dans une solution aqueuse ayant un pH de 2 (± 0,05) stabilisé par l'ajout alternatif de chlorure de sodium et de chlorure d'hydrogène.
L'extraction est réalisée à température ambiante en appliquant une agitation mécanique d'une vitesse de 300 rpm pendant une heure. La phase aqueuse est ensuite séparée de la phase solide à température ambiante par centrifugation avec une vitesse de 15000 rpm pendant 30 minutes suivie d'une étape de filtration.
Le filtrat obtenu est purifié par un système semi-automatique d'ultrafiltration (Akta Flux 6, GE Healthcare, Chicago, IL, USA), utilisant des fibres creuses de seuil de coupure de 3 kDa et de surface de 4 800 cm². Le filtrat est plus particulièrement ajouté dans la cuve de rétentat et mis à circuler pendant 10 min en gardant la pression trans-membranaire à 1,5 bar, le débit d'alimentation à 2 L.min⁻¹ et la vitesse d'agitation à 50 rpm puis lyophilisé. On obtient ainsi un lyophilisat comprenant de l'acide phytique qui est utilisé dans l'étape suivante de préparation des solutions d'imprégnation.

### Préparation de solutions aqueuses d'acide phytique et d'urée

Des solutions aqueuses d'acide phytique et d'urée sont préparées à partir du lyophilisat d'acide phytique obtenu à l'étape précédente et d'urée.
L'urée utilisée est commercialisée par la société Sigma-France sous forme de granulés d'urée de pureté ≥ 99,5% (ReagentPlus ^{®}). 4 solutions aqueuse d'imprégnation comprenant divers pourcentages massiques d'acide phytique et d'urée sont préparées, à savoir :
1/ une solution comprenant 0,63% d'acide phytique et 2% d'urée,
2/ une solution comprenant 1,57% d'acide phytique et 5% d'urée,
3/ une solution comprenant 3,13% d'acide phytique et 10% d'urée,
4/ une solution comprenant 6,26% d'acide phytique et 20% d'urée.
Comme déjà indiqué, les pourcentages sont exprimés en masse par rapport à la masse totale de la solution aqueuse d'imprégnation.
La solution décrite en 1/ est préparée en dissolvant 2 g d'urée et 7,3 g de lyophilisat d'acide phytique dans un volume de 100 mL d'eau.
La solution décrite en 2/ est préparée en dissolvant 5 g d'urée et 18,2 g de lyophilisat d'acide phytique dans un volume de 100 mL d'eau.
La solution décrite en 3/ est préparée en dissolvant 10 g d'urée et 36,4 g de lyophilisat d'acide phytique dans un volume de 100 mL d'eau.
La solution décrite en 4/ est préparée en dissolvant 20 g d'urée et 72 g de lyophilisat d'acide phytique dans un volume de 100 mL d'eau.

D'autres solutions aqueuses d'acide phytique et d'urée sont préparées à partir d'acide phytique commercial et d'urée.
L'acide phytique utilisé est celui commercialisé par la société Sigma Aldrich sous la dénomination « phytic acid solution ». Il s'agit plus particulièrement d'une solution ayant une densité de 1,432 g/mL et une concentration massique en acide phytique de 50 %.
L'urée utilisée est celle décrite au paragraphe précédent.
7 solutions aqueuse d'imprégnation comprenant divers pourcentages massiques d'acide phytique et d'urée sont préparées, à savoir :
1/ une solution comprenant 0,00 % d'acide phytique et 0 % d'urée,
2/ une solution comprenant 0,32 % d'acide phytique et 1 % d'urée,
3/ une solution comprenant 0,63% d'acide phytique et 2% d'urée,
4/ une solution comprenant 1,57% d'acide phytique et 5% d'urée,
5/ une solution comprenant 3,13% d'acide phytique et 10% d'urée,
6/ une solution comprenant 4,70 % d'acide phytique et 15% d'urée,
7/ une solution comprenant 6,26% d'acide phytique et 20% d'urée.
Comme déjà indiqué, les pourcentages sont exprimés en masse par rapport à la masse totale de la solution aqueuse d'imprégnation.
La solution décrite en 1/ est une solution d'eau d'un volume de 100 mL.
La solution décrite en 2/ est préparée en dissolvant 1 g d'urée et 0,44 mL d'acide phytique dans un volume de 100 mL d'eau.
La solution décrite en 3/ est préparée en dissolvant 2 g d'urée et 0,88 mL d'acide phytique dans un volume de 100 mL d'eau.
La solution décrite en 4/ est préparée en dissolvant 5 g d'urée et 2,19 mL d'acide phytique dans un volume de 100 mL d'eau.
La solution décrite en 5/ est préparée en dissolvant 10 g d'urée et 4,37 mL d'acide phytique dans un volume de 100 mL d'eau.
La solution décrite en 6/ est préparée en dissolvant 15 g d'urée et 6,56 mL d'acide phytique dans un volume de 100 mL d'eau.
La solution décrite en 7/ est préparée en dissolvant 20 g d'urée et 8,74 mL d'acide phytique dans un volume de 100 mL d'eau.

### Exemple 2

### Procédé d'ignifugation de fibres de chanvre ayant subies un traitement d'explosion à la vapeur et de blanchiment

### Matériel

Les fibres de chanvres industrielles (Cannabis sativa L.) utilisées dans cette étude ont été cultivées à la Chanvrière à Bar sur Aube (France). Les tiges ont été coupées à quelques centimètres du sol et récoltées sans rouissage à l'automne 2016. Les fibres ont été isolées, séchées et conservées dans un endroit sec et bien ventilé durant toute l'étude.

La soude NaOH utilisée dans le traitement d'explosion à la vapeur est achetée à la société Sigma-France.

Les solutions aqueuse d'acide phytique et d'urée utilisées sont telles que décrites à l'exemple 1.

Traitement d'explosion à la vapeur des fibres de chanvre L'affinage des fibres de chanvre par explosion à la vapeur consiste à imprégner les fibres de chanvre brutes avec une solution aqueuse comprenant 8% de soude, pendant 15 heures à température ambiante et sans agitation.
Les fibres subissent ensuite une explosion à la vapeur d'eau à 190°C pendant 4 min. Après l'explosion, les fibres sont lavées avec de l'eau distillée afin d'enlever toute trace de soude, puis séchées sous la hotte pendant 24 heures.

### Traitement de blanchiment des fibres explosées

Les fibres de chanvre blanchies sont obtenues en utilisant un traitement de délignification à base d'acide acétique et de chlorite de sodium.

Les fibres explosées obtenues à l'étape précédente sont placées dans un ballon à reflux avec de l'eau désionisée (83,3 mL/g de fibres), de l'acide acétique glacial (1,998 mL/g de fibres) et du chlorite de sodium (1.998 mg/g de fibres). Le mélange est chauffé à 70°C pendant 6 h. L'ajout de chlorite de sodium et d'acide acétique glacial est répété 2 fois. Un résidu solide blanchâtre consistant essentiellement en holocellulose est alors obtenu. Après refroidissement, les fibres blanchies sont filtrées sous vide et lavées excessivement avec de l'eau déionisée jusqu'à neutralisation du pH du filtrat. Les fibres sont séchées pendant une nuit à température ambiante.

### Greffage de l'acide phytique selon le procédé de l'invention

Une quantité de 10 g de fibres de chanvres ainsi explosées et blanchies est imprégnée dans 100 mL de chacune des 4 solutions aqueuses d'acide phytique et d'urée telle que définies à l'exemple 1, dont l'acide phytique est extrait des tourteaux de colza, sans agitation, pendant une heure à température ambiante.

Les fibres imprégnées sont ensuite séchées dans une étuve ventilée à une température de 60°C pendant 15 heures jusqu'à ce que les fibres présentent un taux humidité de 30%.

L'étape de greffage est achevée en effectuant une cuisson des fibres séchées à une température de 150°C pendant 2h dans un four tunnel continu.

En fin de traitement, les fibres phosphorylées sont lavées abondamment à l'eau distillée puis filtrées sous vide avant d'être séchées sous hotte pendant 48h.

### Analyses élémentaires

La spectrométrie de masse à plasma inductif (ICP-MS) est utilisée pour la détermination de la teneur en élément phosphore dans les échantillons.
Une quantité de 0,15 g des fibres greffées telles qu'obtenues selon le procédé d'ignifugation de l'invention est mélangée avec 5 mL d'une solution d'acide nitrique dans un tube en verre. Plusieurs tubes sont ainsi préparés puis sont placés dans une unité de minéralisation (système Ultrawave) et laissés à réagir pendant 30 min à 230°C et 110 bars. Les échantillons ont ensuite été laissés pendant 10 min à cette température et pression jusqu'à minéralisation totale. Après minéralisation, les échantillons sont dilués avec 50 mL d'eau déminéralisée et filtrés avant d'être analysés.
Pour l'analyse ICP, une gamme étalon de 50, 100, 500, 1000, 5000, 10000 et 20000 ppb (partie par milliard) est préparée en utilisant une solution commerciale mono-élémentaire de phosphore de concentration 1000 ppm. Un blanc (eau + 10% d'acide nitrique) est injecté avant le passage des divers étalons préparés. On choisit plusieurs longueurs d'ondes pour l'analyse du phosphore, présentant le moins d'interférences possible avec les autres éléments que l'on pourrait retrouver dans l'échantillon. Une droite d'étalonnage est ainsi tracée en analysant les différents étalons. Les échantillons à analyser sont ensuite injectés et si jamais ils ne sont pas dans la bonne gamme des étalons, ils peuvent être re-dilués. Avec les valeurs obtenues grâce à l'ICP on remonte aux masses en phosphore par rapport à ce que l'on a pesé dans chaque tube lors des minéralisations.

Un « Thermo Finnigan Flash EA 112 Series » est utilisé pour l'analyse élémentaire de l'azote, du carbone, de l'oxygène et de l'hydrogène. La combustion des échantillons (1,5 mg) à analyser est effectuée à haute température (1000°C) en présence d'anhydride tungstique, sous atmosphère oxydante pendant 15 s. Cette décomposition donne du CO₂, H₂O, SO₂, NOₓ qui est réduit en N2 en présence de cuivre. Ces produits gazeux sont ensuite analysés par chromatographie en phase gazeuse. Les résultats sont enregistrés et analysés par le logiciel "Eager 300" qui calcule directement le pourcentage de chaque élément présent dans le composé.

### Microcalorimétrie de combustion (PCFC : « Pyrolysis Combustion Flow Calorimetry »)

Un microcalorimètre de combustion (Fire Testing Technology) est utilisé pour étudier le comportement au feu des échantillons de l'invention à l'échelle micrométrique (2-4 mg). Les échantillons sont pyrolysés avec une vitesse de montée en température de 1°C/s sous un flux d'azote de 90 à 750°C (pyrolyse anaérobie - méthode A selon la norme ASTM D7309). Les gaz de pyrolyse sont transportés vers une chambre de combustion en présence d'un flux de N₂/O₂ (80/20). Dans de telles conditions, tous les gaz sont entièrement oxydés. Le dégagement de chaleur (HRR) est calculé selon la relation de Huggett. Selon cette relation, 1 kg d'oxygène consommé correspond à 13,1 MJ de dégagement de chaleur. Chaque test est réalisé deux fois pour garantir la reproductibilité des mesures. Le pic de dégagement de chaleur (pHRR), la température à pHRR (TpHRR), le dégagement de chaleur total (THR), la chaleur de combustion (Δh) et le taux de résidu final (%) sont déterminés.

### Tests de flamme sur les fibres de chanvres ignifugées

Un test au feu non normalisé est réalisé pour évaluer d'une façon simple et rapide l'inflammabilité des fibres. Les fibres brutes et traitées préalablement collées verticalement sur un support en aluminium sont enflammées par un briquet.
Trois comportements sont ainsi discriminés : propagation de flamme sans résidu (inflammation), propagation de flamme avec formation de résidu et non propagation de flamme (autoextinguibilité). Le résidu est également pesé après combustion complète. La masse initiale de chaque fibre est soustraite de la masse du résidu pour calculer le pourcentage de perte de masse (% résidu).

### Résultats

Les résultats obtenus sont montrés dans le tableau 1 ci-dessous ainsi qu'aux figures 1 et 2.
« Acide phytique m/m » désigne le pourcentage massique d'acide phytique utilisé dans la solution aqueuse pour l'imprégnation des fibres.
« Temps de cuisson » désignée la durée de la cuisson effectuée lors de l'étape de greffage du procédé d'ignifugation de l'invention.
« %P » désigne le pourcentage de phosphore greffé de façon covalente à la matière lignocellulosique ignifugée (fibres de chanvre dans cet exemple).
« %N » désigne le pourcentage d'azote provenant de l'urée.
« HRR » désigne le débit calorifique (« Heat Rate Release ») (W/g).
« pHRR » désigne la valeur maximale du pic HRR (W/g).
« T pHRR » désigne le pic de température (°C).
« THR » désigne la chaleur totale dégagée (« Total Heat Release ») (kJ/g).
« %résidu » désigne le pourcentage de résidu charbonné après que la matière lignocellulosique ignifugée (les fibres de chanvre dans cet exemple) ait été brûlée.

**[Tableau 1]**

| Acide phytique (m/m) | Temps de cuisson (heures) | %P | %N | T pHRR (°C) | pHRR (W/g) | THR (kJ/g) | % résidu |
|---|---|---|---|---|---|---|---|
| 0,00 | 2 | 0,00 | 0,05 | 359,5 | 248,0 | 13,8 | 1,8 |
| 0,63 | 2 | 0,31 | 0,05 | 279,5 | 104,5 | 7,4 | 18,5 |
| 1,57 | 2 | 0,49 | 0,05 | 273,5 | 91,5 | 5,0 | 22,5 |
| 3,13 | 2 | 0,62 | 3,16 | 268,0 | 32,5 | 4,5 | 25,4 |
| 6,26 | | 2,14 | 0,93 | 242,0 | 34,5 | 1,3 | 28,6 |

### Commentaires et conclusion

Le tableau 1 est illustré par la figure 1. On observe que plus le pourcentage de phosphore greffé sur les fibres de chanvre est important (2,14%) plus la valeur maximale du pic de dégagement de chaleur (p HRR) diminue (34,5 W/g) (versus 248 W/g pour les fibres de chanvre témoin non ignifugées).

Le constat est le même pour la chaleur totale dégagée (« THR ») qui est de 1,3 kJ/g pour des fibres de chanvre avec un greffage de phosphore de 2,14% versus 13,8 kJ/g pour les fibres de chanvre témoin non ignifugées.

A l'inverse, plus le pourcentage de phosphore greffé sur les fibres de chanvre est important plus le pourcentage de résidu charbonné après que la matière lignocellulosique ignifugée ait été brûlée augmente.

La figure 2 montre que le phosphore est uniformément distribué à la surface et au cœur des fibres de chanvre explosées à la vapeur et ignifugées.

Les fibres de chanvres ignifugées selon le procédé de l'invention, lorsqu'elles sont enflammées, dégagent donc bien moins de chaleur que les fibres de chanvre non ignifugées et charbonnent beaucoup plus.

L'essai décrit ci-dessus est répété une seconde fois, dans les conditions ci-dessus décrites, mais en utilisant cette fois-ci les 7 solutions aqueuses d'imprégnation comprenant de l'acide phytique commercial.
Une quantité de 10 g de fibres de chanvres, explosées et blanchies selon les conditions ci-dessus définies, est imprégnée dans 100 mL de chacune des 7 solutions aqueuses d'acide phytique (Sigma Aldrich) et d'urée telle que définies à l'exemple 1, sans agitation, pendant une heure à température ambiante.
Les résultats sont donnés dans le tableau 2 ci-dessous.

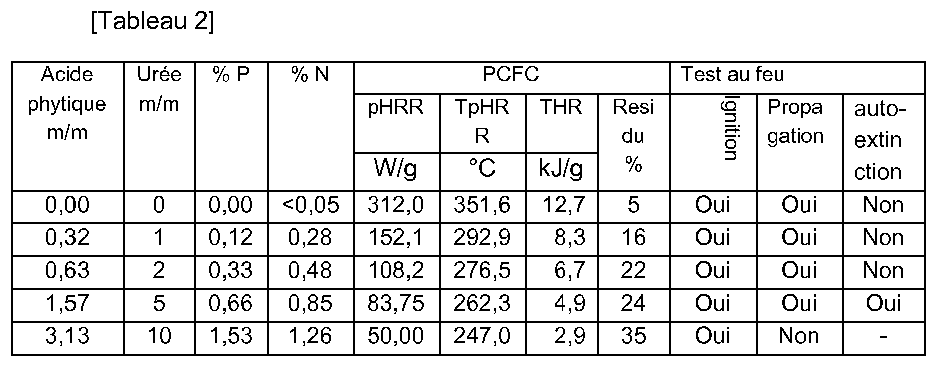

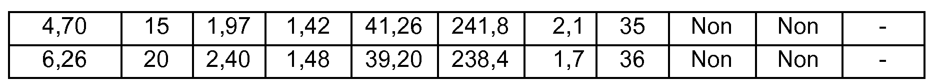

### Commentaires et conclusion

Le tableau 2 est illustré par la figure 3. On observe que plus le pourcentage de phosphore greffé sur les fibres de chanvre est important (2,40%) plus la valeur maximale du pic de dégagement de chaleur (p HRR) diminue (39,2 W/g) (versus 312 W/g pour les fibres de chanvre témoin non ignifugées).

Le constat est le même pour la chaleur totale dégagée (« THR ») qui est de 1,7 kJ/g pour des fibres de chanvre avec un greffage de phosphore de 2,40% versus 12,7 kJ/g pour les fibres de chanvre témoin non ignifugées.

A l'inverse, plus le pourcentage de phosphore greffé sur les fibres de chanvre est important plus le pourcentage de résidu charbonné après que la matière lignocellulosique ignifugée ait été brûlée augmente.

Les fibres de chanvres ignifugées selon le procédé de l'invention, lorsqu'elles sont enflammées, dégagent donc bien moins de chaleur que les fibres de chanvre non ignifugées et charbonnent beaucoup plus.

### Remarque

On note quelques variations dans la teneur de phosphore greffé sur les fibres de chanvre entre les tableaux 1 et 2, alors que les concentrations en acide phytique dans les solutions aqueuses d'imprégnation sont les mêmes. Ces variations peuvent s'expliquer par l'origine différente de l'acide phytique utilisé (les tourteaux de colza versus l'origine commerciale). En outre, les fibres de chanvre sont des fibres naturelles qui présentent des variabilités dans leur morphologie. Cependant, malgré ces différences, on constate dans tous les cas un greffage satisfaisant du phosphore sur les fibres de chanvre, qui augmente avec le pourcentage d'acide phytique présent dans la solution d'imprégnation, ce qui montre l'efficacité du procédé d'ignifugation de l'invention.

### Exemple 3

### Procédé d'ignifugation de fibres de chanvre explosées à la vapeur mais n'ayant pas subi de blanchiment

Cet exemple est un exemple comparatif de l'exemple 2. Dans cet exemple les fibres de chanvre ont subi seulement un traitement par explosion à la vapeur et n'ont pas subi de blanchiment. Les fibres de chanvres explosées et non blanchies, sont ignifugées selon le procédé de l'invention, à l'aide respectivement des 7 solutions aqueuses d'acide phytique (commercial - Sigma Aldrich) et d'urée telle que définies à l'exemple 1.

### Les résultats obtenus sont donnés dans le tableau 3 ci-dessous.

**[Tableau 3]**

| Acide phytique m/m | Urée m/m | P % | N % | PCFC | | | | Test au feu | | |
|---|---|---|---|---|---|---|---|---|---|---|
| | | | | pHRR | TpHRR | THR | Resi du % | Igni- tion | Propa- gation | auto-extinc-tion |
| | | | | W/g | °C | kJ/g | | | | |
| 0,00 | 0 | 0,07 | <0,05 | 300,8 | 358,6 | 12,4 | 7 | Oui | Oui | Non |
| 0,32 | 1 | 0,15 | 0,05 | 260,9 | 322,0 | 11,1 | 8 | Oui | Oui | Non |
| 0,63 | 2 | 0,24 | 0,31 | 180,4 | 295,9 | 8,90 | 12 | Oui | Oui | Non |
| 1,57 | 5 | 0,53 | 0,66 | 86,30 | 266,1 | 5,40 | 25 | Oui | Oui | Oui |
| 3,13 | 10 | 0,93 | 0,78 | 57,80 | 255,9 | 3,40 | 29 | Oui | Non | - |
| 4,70 | 15 | 1,48 | 1,07 | 46,30 | 250,5 | 2,50 | 36 | Non | Non | - |
| 6,26 | 20 | 1,83 | 1,40 | 42,90 | 237,6 | 2,30 | 34 | Non | Non | - |

### Commentaires et conclusion

Le tableau 3 est illustré par la figure 4. On peut faire les mêmes observations pour les fibres de chanvre explosées et non blanchies (ignifugées) que pour les fibres de chanvre explosées et blanchies (ignifugées), à savoir : plus le pourcentage de phosphore greffé sur les fibres de chanvre est important (1,83%) plus la valeur maximale du pic de dégagement de chaleur (p HRR) diminue (42,90W/g) (versus 300,8 W/g pour les fibres de chanvre explosées témoin (non ignifugées).

Le constat est le même pour la chaleur totale dégagée (« THR ») qui est de 2,30kJ/g pour des fibres de chanvre explosées avec un greffage de phosphore de 1,83% versus 12,4 kJ/g pour les fibres de chanvre explosées témoin (non ignifugées).

A l'inverse, plus le pourcentage de phosphore greffé sur les fibres de chanvre est important plus le pourcentage de résidu charbonné après que la matière lignocellulosique ignifugée ait été brûlée augmente.

Pour le même taux d'acide phytique utilisé (3,13%), on remarque une diminution plus importante du pic HRR des fibres de chanvre explosées et blanchies (50,00 W/g versus 57,80 W/g pour les fibres de chanvre explosées et non blanchies). Cette diminution est accompagnée par un décalage de la température du pic et la chaleur totale dégagée. Le constat est le même pour les différents taux d'acide phytique montrant ainsi une diminution plus importante du pic HRR, de la température du pHRR et de la chaleur totale dégagée pour les fibres de chanvres explosées et blanchies (ignifugées) que pour les fibres de chanvre explosées et non blanchies (ignifugées).

On note cependant que les résultats obtenus selon l'exemple 2 sont encore meilleurs que ceux de l'exemple 3 (voir respectivement les données des tableaux 2 et 3). On peut donc en conclure que, pour des fibres de chanvre, l'étape préalable d'explosion à la vapeur, suivie de l'étape de blanchiment permet d'améliorer l'efficacité du procédé ignifugeant de l'invention.

### Exemple 4

### Procédé d'ignifugation de fibres de chanvre n'ayant pas subies d'explosion à la vapeur et pas de blanchiment

Dans cet exemple les fibres de chanvre n'ont pas subi de traitement préalable d'explosion à la vapeur et de blanchiment. Les fibres de chanvres brutes, à savoir non explosées et non blanchies, sont ignifugées selon le procédé de l'invention, à l'aide respectivement de 4 solutions aqueuses d'acide phytique (commercial - Sigma Aldrich) et d'urée telle que définies à l'exemple 1, qui comprennent 0,00%, 1,57%, 3,13% et 6,26% d'acide phytique.

Les résultats obtenus en termes de propriétés thermiques sont donnés dans le tableau 4 ci-dessous.

**[Tableau 4]**

| % acide phytique | % urée | Temps de cuisson (h) | Chanvre Brut | | | |
|---|---|---|---|---|---|---|
| | | | TpHRR (°C) | pHRR (W/g) | THR (kJ/g) | % résidu |
| 0 | 0 | 0 | 357 | 148,0 | 11,6 | 14 |
| 1,57 | 5 | 2 | 276,1 | 131,7 | 7,0 | 20 |
| 3,13 | 10 | 2 | 258,2 | 78,0 | 4,4 | 29 |
| 6,26 | 20 | 2 | 260,3 | 45,6 | 2,5 | 33 |

### Commentaires et conclusion

Le tableau 4 est illustré par la figure 5. On peut faire les mêmes observations pour les fibres de chanvre ignifugées brutes (non explosées, non blanchies) (exemple 4) que pour les fibres de chanvre ignifugées, explosées et non blanchies (exemple 3) et les fibres de chanvre ignifugées, explosées et blanchies (exemple 2). Ces observations sont les suivantes : plus le pourcentage d'acide phytique utilisé sur les fibres de chanvre est important (6,26%) (et donc plus le taux de phosphore greffé sur les fibres est important) plus la valeur maximale du pic de dégagement de chaleur (p HRR) diminue (45,60W/g) (versus 148,0 W/g pour les fibres de chanvre explosées témoin (0% acide phytique)).

Le constat est le même pour la chaleur totale dégagée (« THR ») qui est de 2,5kJ/g pour des fibres de chanvre explosée ignifugées avec 6,26% d'acide phytique versus 11,6 kJ/g pour les fibres de chanvre explosées témoin (0% acide phytique).

A l'inverse, plus le pourcentage d'acide phytique utilisé sur les fibres de chanvre est important plus le pourcentage de résidu charbonné après que la matière lignocellulosique ignifugée ait été brûlée augmente.

En conclusion, il a été montré dans les exemples 2, 3 et 4 (voir tableaux 2 à 4 et figures 3 à 5) que le procédé d'ignifugation de l'invention est efficace aussi bien sur des fibres végétales brutes, à savoir non explosées à la vapeur et non blanchies (exemple 4), que sur des fibres végétales explosées à la vapeur et non blanchies (exemple 3) et que sur des fibres végétales explosées à la vapeur et blanchies (exemple 2).

### Exemple 5

### Mise en évidence des avantages du traitement d'explosion à la vapeur et du blanchiment sur des fibres de chanvre devant être ignifugées

Cet exemple est une comparaison des exemples 2, 3 et 4. Dans cet exemple les fibres de chanvre brutes (non explosées et non blanchies), les fibres de chanvre explosées et non blanchies (exemple 3) et les fibres de chanvre explosées et blanchies (exemple 2), sont ignifugées selon le procédé de l'invention, à l'aide de la même solution aqueuse de 3,13% d'acide phytique et de 10% d'urée telle que définie à l'exemple 1.

La comparaison des résultats obtenus en termes de propriétés thermiques sont donnés dans le tableau 5 ci-dessous.

**[Tableau 5]**

| Fibres de chanvre | TpHRR (°C) | pHRR (W/g) | THR (kJ/g) | % résidu |
|---|---|---|---|---|
| Brutes (non explosées, non blanchies) | 258,2 | 78,0 | 4,4 | 29 |
| Explosées mais non blanchies | 255,9 | 57,8 | 3,4 | 29 |
| Explosées et blanchies | 247,0 | 50,00 | 2,9 | 35 |

### Commentaires et conclusion

Les résultats du tableau 5 sont illustrés par la figure 6. Pour le même taux d'acide phytique utilisé (3,13%), on remarque une diminution plus importante du pic HRR des fibres de chanvre explosées et blanchies (50 W/g versus 57,8 W/g pour les fibres de chanvre explosées et 78W/g pour les fibres de chanvre brutes). Cette diminution est accompagnée par un décalage de la température du pic et la chaleur totale dégagée. Le constat est le même pour les différents taux d'acide phytique, montrant ainsi une diminution plus importante du pic HRR, de la température du pHRR et de la chaleur totale dégagée pour les fibres de chanvres explosées et blanchies (ignifugées) que pour les fibres de chanvre explosés et non blanchies (ignifugées) que pour les fibres de chanvre brutes (non explosées, non blanchies) (ignifugées).

En conclusion, le procédé d'ignifugation de l'invention est efficace aussi bien sur des fibres végétales brutes, à savoir non explosées à la vapeur et non blanchies, que sur des fibres végétales explosées à la vapeur et non blanchies, que sur des fibres végétales explosées et blanchies.
Ainsi, l'étape d'explosion à la vapeur suivie de l'étape de blanchiment permet d'améliorer l'efficacité du procédé ignifugeant de l'invention.

### Exemple 6

### Procédé d'ignifugation de particules d'épicéa par trempage

### Matériel

L'acide phytique utilisé dans cet exemple est celui commercialisé par la société Sigma Aldrich sous la dénomination « phytic acid solution », tel que défini à l'exemple 1 (solution ayant une densité de 1,432 g/mL et une concentration massique en acide phytique de 50 %).

Les granulées d'urée de pureté utilisés sont les mêmes que ceux de l'exemple 1. L'acide sulfurique concentré, utilisé dans le procédé d'explosion à la vapeur, est commercialisé par la société Sigma Aldrich et est mélangé avec de l'eau déminéralisé afin de préparer une concentration massique de 2%.

### Préparation d'une solution aqueuse d'acide phytique et d'urée

La solution aqueuse d'imprégnation est préparée en mélangeant 30 g d'urée, 13 mL d'une solution aqueuse d'acide phytique commerciale et 100 mL d'eau distillée. La solution aqueuse d'imprégnation ainsi obtenue comprend 6,26 % en masse d'acide phytique et 20 % en masse d'urée par rapport à la masse totale de la solution aqueuse.

### Traitement d'explosion à la vapeur des fibres d'épicéa

Des particules de duramen d'épicéa (2 à 5 mm de diamètre) sont placées dans une solution d'acide sulfurique à 2% (2% en masse dans l'eau), dans un rapport solide / liquide de 1/5 durant 4 heures à température ambiante et sans agitation. L'explosion à la vapeur est effectuée à une température de 200°C pendant 5 min de temps de séjour. Suite à l'explosion, on procède à un lavage des particules d'épicéa explosées avec de l'eau.

### Greffage de l'acide phytique selon le procédé de l'invention

Les particules d'épicéa explosées (80 g) sont imprégnées pendant une heure, par trempage dans 400mL de la solution aqueuse d'acide phytique et d'urée préalablement préparée (comprenant 6,26 % d'acide phytique et 20 % d'urée). Les particules d'épicéa sont séchées à l'air et à température ambiante durant 18 h puis placées dans un four à 150°C pendant 2 heures.

Les particules d'épicéa sont ensuite caractérisées par les techniques précédemment décrites et notamment par Microcalorimétrie de combustion (PCFC : « Pyrolysis Combustion Flow Calorimetry ») et par le test de flammes.

Les résultats obtenus sont décrits dans le tableau 6 ci-dessous.

**[Tableau 6]**

| Acide phytique (m/m) | Temps de cuisson heure) | %P | %N | T pHRR (°C) | pHRR (W/g) | THR (kJ/g) | % résidu |
|---|---|---|---|---|---|---|---|
| Courbe 1 | 0 | 0,00 | 0,00 | 381 | 167 | 11,95 | 15,2 |
| 0,00 | | | | | | | |
| (explosées) | | | | | | | |
| Courbe 2 | 2 | 0,00 | 0,00 | 381 | 164 | 12,50 | 15,4 |
| 0,00 | | | | | | | |
| (explosées, séchées et cuites) | | | | | | | |
| Courbe 3 | 2 | 2,14 | 0,93 | 280 | 55 | 4,05 | 34,3 |
| 6,26 | | | | | | | |
| (explosées et ignifugées) | | | | | | | |

### Commentaires et conclusion

Le tableau 6 est illustré par la figure 7. Le dégagement de chaleur est approximativement le même pour les particules d'épicéa explosées (courbe 1) et les particules d'épicéa explosées, séchées et cuites, mais non imprégnées (courbe 2).

Le traitement d'ignifugation de l'invention sur les particules d'épicéa préalablement explosées à la vapeur fait diminuer de façon drastique la valeur maximale du pic de dégagement de chaleur (p HRR) (55 W/g) (versus 167 W/g et 164 W/g pour respectivement les particules d'épicéa explosées (courbe 1) et explosées, séchées et cuites mais non imprégnées (courbe 2)).

Le constat est le même pour la chaleur totale dégagée (« THR ») qui est de 4,05 kJ/g pour les particules d'épicéa explosées et ignifugées et comprenant un greffage de phosphore de 2,14% versus 11,95 kJ/g pour les particules d'épicéa explosées (courbe 1) et 12,50 kJ/g pour les particules d'épicéa explosées, séchées et cuites mais non imprégnées (courbe 2).

A l'inverse, le pourcentage de résidu charbonné après que la matière lignocellulosique ignifugée ait été brûlée augmente et est de 34,3 % pour les particules d'épicéa explosées et ignifugées versus 15,2% pour les particules d'épicéa explosées (courbe 1) et 15,4 % pour les particules d'épicéa explosées, séchées et cuites mais non imprégnées (courbe 2).

Les particules d'épicéa ignifugées selon le procédé de l'invention, lorsqu'elles sont enflammées, dégagent donc bien moins de chaleur que les particules d'épicéa non ignifugées et charbonnent beaucoup plus.

### Exemple 7

### Procédé d'ignifugation de particules d'épicéa par pulvérisation

Cet exemple est un exemple comparatif de l'exemple 6. Les conditions de cet exemple sont celles décrites dans l'exemple 6, la différence résidant dans l'étape d'imprégnation des particules d'épicea explosées (80 g) qui est effectuée par pulvérisation (et non pas par trempage) à l'aide de 160 mL d'une solution aqueuse comprenant 10% d'acide phytique et 10% d'urée.
Les particules d'épicéa ainsi imprégnées sont directement (sans séchage) placées dans un four à 150°C pendant 30 minutes (au lieu de 2 heures dans l'exemple 6). Comme déjà indiqué, lorsque l'imprégnation est effectuée par pulvérisation, il n'est pas nécessaire de procéder à un séchage avant la pulvérisation.
Remarque : dans l'exemple 6, 400 mL d'une solution aqueuse d'imprégnation comprenant 6,26 % d'acide phytique et 20 % d'urée sont utilisés. Cela signifie que l'on utilise, pour l'étape d'imprégnation par trempage, 25,04 g d'acide phytique (6,26x400/100) et 80 g d'urée (20x400/100).
Dans le présent exemple (imprégnation par pulvérisation), 160 mL d'une solution aqueuse d'imprégnation comprenant 10% d'acide phytique et 10% d'urée sont utilisés. Cela signifie que l'on utilise, pour l'étape d'imprégnation par pulvérisation, 16 g d'acide phytique (10x160/100) et 16 g d'urée (10x160/100).
Les quantités d'acide phytique et d'urée sont donc moindres dans l'étape d'imprégnation par pulvérisation que dans l'étape d'imprégnation par trempage.

Les résultats obtenus en termes de propriétés thermiques sont donnés dans le tableau 7 ci-dessous.

**[Tableau 7]**

| Acide phytique (%) | Temps de cuisson (minutes) | TpHRR (°C) | pHRR (W/g) | THR (kJ/g) | % résidu |
|---|---|---|---|---|---|
| Courbe 1 | 0 | 381 | 167 | 11,95 | 15,2 |
| 0% | | | | | |
| (explosées) (témoin) | | | | | |
| Courbe 2 | 30 | 292,2 | 83,5 | 7,3 | 29,7 |
| 6,26% | | | | | |
| (explosées et pulvérisées) | | | | | |
| Courbe 3 | 120 | 280 | 55 | 4,05 | 34,3 |
| 6,26% | | | | | |
| (explosées et trempées) | | | | | |

### Commentaires et conclusion

Le tableau 7 est illustré par la figure 8. Bien que la quantité d'acide phytique utilisée par la pulvérisation soit nettement plus faible qu'avec le trempage (-36%), les courbes HRR en PCFC de la figure 8 montrent une efficacité signalée par une chute significative des valeurs du pHRR de 167 W/g (témoin) à 83,5 W/g accompagnée par un décalage vers des températures plus faibles (381°C versus 292.2°C ).

Le constat est le même pour la chaleur totale dégagée (THR) qui est de 11,95 kJ/g pour des particules d'épicéa non traitées versus 7,3 kJ/g pour celles ignifugées par pulvérisation.

A l'inverse, pour des particules traitées par pulvérisation, le pourcentage de résidu charbonné après ignifugation est le double de celui des particules non traitées.

En conclusion, les courbes HRR en PCFC de la figure 8 montrent l'efficacité de la pulvérisation de la solution ignifugeante sur l'ignifugation des particules d'épicéa, alors même que les quantités de phosphore sont moindres avec la pulvérisation.
L'étape d'imprégnation par pulvérisation du procédé d'ignifugation de l'invention permet de réduire de façon importante la quantité de réactifs utilisés tout en conservant des propriétés thermiques intéressantes.

### Exemple 8

### Greffage covalent de l'acide phytique sur la matière lignocellulosique ignifugée

Comme décrit précédemment, le greffage de l'acide phytique sur la matière lignocellulosique est de nature covalente (liaison forte et durable). Le greffage covalent sur les fibres de chanvre résiste avantageusement aux lavages successifs à l'eau. Ce greffage a pu être confirmé par RMN du solide (voir la figure 9) avec la détection d'un signal avec un épaulement attribué au groupement phosphate greffé (ratio 1/6). Une confirmation a pu être apportée par la mesure des temps de relaxation des atomes de phosphore (P1 = 6,8 secondes, P2 = 10,9 secondes). Le temps de relaxation supérieur pour P2 greffé s'explique par une mobilité plus faible.

### Liste des documents cités

### Littérature non-brevet

À toute fin utile, le(s) élément(s) non-brevet(s) suivant(s) est (sont) cité(s) :
- (1) : Yang Zhou et al., Carbohydrate Polymers, 115 (2015) 670-676 ;
- (2) :Lucie Costes et al., European Polymer Journal, 74 (2016) 218-228 ; ;
- (3) : Yu-Yang Gao et al., Polymer Degradation and Stability, 161 (2019) 298-308 ; et
- (4) : Xiao-hui Liu et al, Cellulose, 25, 799-811(2018).

## Revendications

1. Procédé d'ignifugation d'une matière lignocellulosique biosourcée **caractérisé en ce qu'**il comprend les étapes suivantes :
- éventuellement explosion à la vapeur et/ou blanchiment de la matière lignocellulosique biosourcée,
- imprégnation de la matière lignocellulosique biosourcée, éventuellement explosée à la vapeur et/ou blanchie, dans ou avec une solution aqueuse comprenant de 0,5% à 7% d'acide phytique et de 1% à 22% d'urée, lesdits pourcentages étant exprimés en masse par rapport à la masse totale de la solution aqueuse,
- éventuellement, séchage de la matière lignocellulosique biosourcée imprégnée, jusqu'à ce qu'elle présente une humidité allant de 5% à 20%, lesdits pourcentages étant exprimés en masse par rapport à la masse totale de la matière lignocellulosique biosourcée imprégnée,
- cuisson de la matière lignocellulosique biosourcée imprégnée et éventuellement séchée, à une température allant de 140°C à 200°C, et de préférence de 140°C à 160°C, pendant une durée allant de 15 minutes à 5 heures et de préférence de 30 min à 2h,
la matière lignocellulosique biosourcée ignifugée ainsi obtenue comprenant une teneur en phosphore provenant de l'acide phytique allant de 0,1% à 10%, de préférence allant de 0,3 % à 3%, lesdits pourcentages étant exprimés en masse par rapport à la masse totale de la matière lignocellulosique biosourcée ignifugée,
ledit procédé étant encore **caractérisé en ce que** la matière lignocellulosique biosourcée utilisée au départ n'a subi aucun autre traitement chimique que celui d'une éventuelle explosion à la vapeur et/ou d'un éventuel blanchiment.

2. Procédé selon la revendication 1, **caractérisé en ce que** la matière lignocellulosique biosourcée se trouve sous forme de fibres végétales telles que les fibres de bois et/ou les fibres de plante, et en particulier les fibres libériennes, ou sous forme de particules de bois.

3. Procédé selon la revendication 2, **caractérisé en ce que** :
- les fibres de plante sont des fibres libériennes choisies dans le groupe comprenant les fibres de chanvre, de lin, de ramie et de jute,
- les fibres et/ou particules de bois sont choisies dans le groupe comprenant les fibres et/ou particules d'épicéa, de frêne, de bouleau, de peuplier, de hêtre et de chêne.

4. Procédé selon l'une quelconque des revendications 1 à 3, **caractérisé en ce que** la matière lignocellulosique biosourcée est choisie dans le groupe comprenant les fibres de plante explosées à la vapeur, et en particulier les fibres libériennes explosées à la vapeur, les fibres de bois explosées à la vapeur et les particules de bois explosées à la vapeur.

5. Procédé selon la revendication 4, **caractérisé en ce que** les fibres de plante explosées à la vapeur, et en particulier les fibres libériennes explosées à la vapeur, présentent un diamètre inférieur à 100 µm, et de préférence inférieur à 50 µm, et une longueur allant de 1 cm à 10 cm, et de préférence de 3 cm à 5 cm.

6. Procédé selon l'une quelconque des revendications 1 à 5, **caractérisé en ce que** la matière lignocellulosique biosourcée est blanchie.

7. Procédé selon l'une quelconque des revendications 1 à 6, **caractérisé en ce que** l'acide phytique utilisé est obtenu à partir d'un tourteau de colza.

8. Procédé selon l'une quelconque des revendications 1 à 7, **caractérisé en ce que** l'étape d'imprégnation de la matière lignocellulosique biosourcée est effectuée à température ambiante :
- par trempage dans la solution aqueuse d'acide phytique et d'urée, ou
- par pulvérisation avec la solution aqueuse d'acide phytique et d'urée.

9. Procédé selon l'une quelconque des revendications 1 à 8, **caractérisé en ce que** l'étape de séchage de la matière lignocellulosique biosourcée imprégnée est effectuée à une température allant de 20°C à 60°C, et de préférence de 40 °C à 60°C, pendant une durée allant de 5 minutes à 18 heures, et de préférence allant de 15 minutes à 30 minutes.

10. Procédé selon l'une quelconque des revendications 1 à 9, **caractérisé en ce que**, dans la matière lignocellulosique biosourcée ignifugée, le phosphore provenant de l'acide phytique est greffé par liaison covalente à la surface et au cœur de ladite matière lignocellulosique biosourcée ignifugée.

11. Utilisation de la matière lignocellulosique biosourcée ignifugée telle qu'obtenue selon le procédé de l'une quelconque des revendications 1 à 10, pour la fabrication :
- de matériaux composites ignifugés à base de fibres végétales,
- de matériaux souples ignifugés tissés ou non tissés à base de fibres végétales, et notamment de textiles,
- de matériaux ignifugés à base de fibres de bois et/ou de particules de bois, et notamment de panneaux de bois ignifugés.

12. Utilisation selon la revendication 11, pour la fabrication de panneaux de bois ignifugés, **caractérisée en ce que** la matière lignocellulosique biosourcée ignifugée est obtenue à partir de fibres de bois explosées à la vapeur et/ou de particules de bois explosées à la vapeur, et **en ce que** les panneaux de bois ignifugés obtenus sont dépourvus de colle et de résine.

## Patentansprüche

1. Verfahren zur Flammhemmung eines biobasierten Lignocellulosematerials, **dadurch gekennzeichnet, dass** es die folgenden Schritte umfasst:
- gegebenenfalls Dampfexplosion und/oder Bleichen des biobasierten lignocellulosehaltigen Materials,
- Imprägnieren des biobasierten Lignocellulosematerials, das gegebenenfalls dampfexplodiert und/oder gebleicht wurde, in oder mit einer wässrigen Lösung, die 0,5 % bis 7 % Phytinsäure und 1 % bis 22 % Harnstoff enthält, wobei die Prozentangaben in Masse bezogen auf die Gesamtmasse der wässrigen Lösung ausgedrückt sind,
- gegebenenfalls Trocknen des imprägnierten biobasierten Lignocellulosematerials, bis es einen Feuchtigkeitsgehalt von 5 % bis 20 % aufweist, wobei die Prozentangaben in Masse bezogen auf die Gesamtmasse des imprägnierten biobasierten Lignocellulosematerials ausgedrückt sind,
- Kochen des imprägnierten und gegebenenfalls getrockneten biobasierten Lignocellulosematerials bei einer Temperatur von 140 °C bis 200 °C, bevorzugt 140 °C bis 160 °C, für einen Zeitraum von 15 Minuten bis 5 Stunden, bevorzugt 30 min bis 2 Stunden,
wobei das so erhaltene flammhemmende biobasierte Lignocellulosematerial einen Gehalt an Phosphor aus Phytinsäure von 0, 1 % bis 10 %, bevorzugt 0,3 % bis 3 % aufweist, wobei die Prozentsätze in Masseprozent bezogen auf die Gesamtmasse des flammhemmenden biobasierten Lignocellulosematerials ausgedrückt sind,
wobei das Verfahren ferner **dadurch gekennzeichnet ist, dass** das ursprünglich verwendete biobasierte Lignocellulosematerial keiner weiteren chemischen Behandlung außer der einer eventuellen Dampfexplosion und/oder eines eventuellen Bleichens unterzogen worden ist.

2. Verfahren nach Anspruch 1, **dadurch gekennzeichnet, dass** das biobasierte Lignocellulosematerial in Form von pflanzlichen Fasern wie Holzfasern und/oder Pflanzenfasern, insbesondere Bastfasern, oder in Form von Holzpartikeln vorliegt.

3. Verfahren nach Anspruch 2, **dadurch gekennzeichnet, dass**:
- die Pflanzenfasern Bastfasern sind, gewählt aus der Gruppe, umfassend Hanf-, Flachs-, Ramie- und Jutefasern,
- die Holzfasern und/oder -partikel aus der Gruppe gewählt sind, umfassend Fasern und/oder Partikel von Fichte, Esche, Birke, Pappel, Buche und Eiche.

4. Verfahren nach einem der Ansprüche 1 bis 3, **dadurch gekennzeichnet, dass** das biobasierte Lignocellulosematerial gewählt ist aus der Gruppe, umfassend dampfexplodierte Pflanzenfasern und insbesondere dampfexplodierte Bastfasern, dampfexplodierte Holzfasern und dampfexplodierte Holzpartikel.

5. Verfahren nach Anspruch 4, **dadurch gekennzeichnet, dass** die dampfexplodierten Pflanzenfasern und insbesondere die dampfexplodierten Bastfasern einen Durchmesser von weniger als 100 µm, bevorzugt weniger als 50 µm, und eine Länge von 1 cm bis 10 cm, bevorzugt 3 cm bis 5 cm, aufweisen.

6. Verfahren nach einem der Ansprüche 1 bis 5, **dadurch gekennzeichnet, dass** das biobasierte Lignocellulosematerial gebleicht wird.

7. Verfahren nach einem der Ansprüche 1 bis 6, **dadurch gekennzeichnet, dass** die verwendete Phytinsäure aus Rapskuchen gewonnen wird.

8. Verfahren nach einem der Ansprüche 1 bis 7, **dadurch gekennzeichnet, dass** der Schritt des Imprägnierens des biobasierten Lignocellulosematerials bei Raumtemperatur durchgeführt wird:
- durch Einweichen in der wässrigen Lösung von Phytinsäure und Harnstoff, oder
- durch Besprühen mit der wässrigen Lösung aus Phytinsäure und Harnstoff.

9. Verfahren nach einem der Ansprüche 1 bis 8, **dadurch gekennzeichnet, dass** der Schritt des Trocknens des imprägnierten biobasierten Lignocellulosematerials bei einer Temperatur von 20 °C bis 60 °C, bevorzugt von 40 °C bis 60 °C, für eine Dauer von 5 Minuten bis 18 Stunden, bevorzugt von 15 Minuten bis 30 Minuten, durchgeführt wird.

10. Verfahren nach einem der Ansprüche 1 bis 9, **dadurch gekennzeichnet, dass** in dem flammhemmenden biobasierten Lignocellulosematerial der Phosphor aus Phytinsäure durch kovalente Bindung auf die Oberfläche und den Kern des flammhemmenden biobasierten Lignocellulosematerials aufgepfropft wird.

11. Verwendung des flammhemmenden biobasierten Lignocellulosematerials, erhalten nach dem Verfahren eines der Ansprüche 1 bis 10, zur Herstellung:
- flammhemmender Verbundmaterialien auf Basis von Pflanzenfasern,
- gewebter oder nicht gewebter flammhemmender weicher Materialien auf Basis von Pflanzenfasern, insbesondere Textilien,
- flammhemmender Materialien auf Basis von Holzfasern und/oder Holzpartikeln, insbesondere flammhemmende Holzplatten.

12. Verwendung nach Anspruch 11 zur Herstellung von flammhemmenden Holzplatten, **dadurch gekennzeichnet, dass** das flammhemmende biobasierte Lignocellulosematerial aus dampfexplodierten Holzfasern und/oder dampfexplodierten Holzpartikeln gewonnen wird und dass die erhaltenen flammhemmenden Holzplatten frei von Klebstoff und Harz sind.

## Claims

1. A process for the flame retardancy of a biobased lignocellulosic material, **characterized in that** it comprises the following steps:
- optionally steam explosion and/or bleaching of the biobased lignocellulosic material,
- impregnation of the biobased lignocellulosic material, optionally steam-exploded and/or bleached, in or with an aqueous solution comprising from 0.5% to 7% phytic acid and from 1% to 22% urea, said percentages being expressed by mass relative to the total mass of the aqueous solution,
- optionally drying the impregnated biobased lignocellulosic material until it has a moisture content ranging from 5% to 20%, said percentages being expressed by mass relative to the total mass of the impregnated biobased lignocellulosic material,
- cooking the impregnated and optionally dried biobased lignocellulosic material, at a temperature ranging from 140°C to 200°C, and preferably from 140°C to 160°C, for a time ranging from 15 minutes to 5 hours and preferably from 30 minutes to 2 hours,
the flame-retarded biobased lignocellulosic material thus obtained comprising a content of phosphorus originating from phytic acid ranging from 0.1% to 10%,
preferably ranging from 0.3% to 3%, said percentages being expressed by mass relative to the total mass of the flame-retarded biobased lignocellulosic material,
said process being further **characterized in that** the biobased lignocellulosic material used at the start has not undergone any chemical treatment other than that of possible steam explosion and/or bleaching.

2. The process as claimed in claim 1, **characterized in that** the biobased lignocellulosic material is in the form of plant fibers such as wood fibers and/or plant fibers, and in particular bast fibers, or in the form of wood particles.

3. The process as claimed in claim 2, **characterized in that**:
- the plant fibers are bast fibers chosen from the group comprising hemp, flax, ramie and jute fibers,
- the wood fibers and/or particles are chosen from the group comprising spruce, ash, birch, poplar, beech and oak fibers and/or particles.

4. The process as claimed in any one of claims 1 to 3, **characterized in that** the biobased lignocellulosic material is chosen from the group comprising steam-exploded plant fibers, and in particular steam-exploded bast fibers, steam-exploded wood fibers and steam-exploded wood particles.

5. The process as claimed in claim 4, **characterized in that** the steam-exploded plant fibers, and in particular the steam-exploded bast fibers, have a diameter of less than 100 µm, and preferably less than 50 µm, and a length ranging from 1 cm to 10 cm, and preferably from 3 cm to 5 cm.

6. The process as claimed in any one of claims 1 to 5, **characterized in that** the biobased lignocellulosic material is bleached.

7. The process as claimed in any one of claims 1 to 6, **characterized in that** the phytic acid used is obtained from a rapeseed oil cake.

8. The process as claimed in any one of claims 1 to 7, **characterized in that** the step of impregnation of the biobased lignocellulosic material is performed at room temperature:
- by soaking in the aqueous solution of phytic acid and urea, or
- by spraying with the aqueous solution of phytic acid and urea.

9. The process as claimed in any one of claims 1 to 8, **characterized in that** the step of drying of the impregnated biobased lignocellulosic material is performed at a temperature ranging from 20°C to 60°C, and preferably from 40°C to 60°C, for a time ranging from 5 minutes to 18 hours, and preferably ranging from 15 minutes to 30 minutes.

10. The process as claimed in any one of claims 1 to 9, **characterized in that**, in the flame-retarded biobased lignocellulosic material, the phosphorus originating from the phytic acid is grafted by covalent bonding to the surface and to the core of said biobased flame-retarded lignocellulosic material.

11. The use of the flame-retarded biobased lignocellulosic material as obtained according to the process of any one of claims 1 to 10, for the manufacture of:
- flame-retarded composite materials based on plant fibers,
- flexible flame-retarded woven or nonwoven materials based on plant fibers, and notably textiles,
- flame-retarded materials based on wood fibers and/or wood particles, and notably flame-retarded wood panels.

12. The use as claimed in claim 11, for the manufacture of flame-retarded wood panels, **characterized in that** the flame-retarded biobased lignocellulosic material is obtained from steam-exploded wood fibers and/or steam-exploded wood particles, and **in that** the flame-retarded wood panels obtained are free of glue and resin.
